# EUROPEAN PATENT SPECIFICATION

(11) **EP 1 833 717 B1**
(45) Date of publication and mention of the grant of the patent: **20.10.2010**
(21) Application number: 05813325.7
(22) Date of filing: 09.12.2005
(51) Int. Cl.: B62D 61/12, B60G 11/27

(54) **AIR SPRING FOR LIFTING A VEHICLE AXLE AND VEHICLE PROVIDED WITH SUCH AN AIR SPRING**
LUFTFEDER ZUM ANHEBEN EINER FAHRZEUGACHSE UND MIT SOLCH EINER LUFTFEDER VERSEHENES FAHRZEUG
RESSORT PNEUMATIQUE POUR LEVER UN ESSIEU DE VEHICULE ET VEHICULE POURVU D'UN TEL RESSORT PNEUMATIQUE

(30) Priority: 30.12.2004 SE 0403227
(43) Date of publication of application: 19.09.2007
(73) Proprietor: VOLVO LASTVAGNAR AB, 405 08 Göteborg (SE)
(72) Inventor: TERBORN, Bengt, S-424 70 Olofstorp (SE); WOKIL, Hayder, S-442 54 Ytterby (SE)
(74) Representative: Fröhling, Werner Otto
(86) International application number: PCT/SE2005/001878
(87) International publication number: WO 2006/071172

(56) References cited:
- EP-A- 1 429 045
- EP-A1- 0 836 984
- WO-A-2004/108445
- DE-B- 1 132 013
- FR-A- 1 299 215
- US-A1- 2004 178 594

## Description

### TECHNICAL FIELD

The present invention relates to an air spring for lifting one or more of the axles of a truck and/or trailer road vehicle having a plurality of rear axles, in accordance with the preamble of claim 1, and a vehicle provided with such an air spring, in accordance with the preamble of claim 15.

### BACKGROUND ART

Devices for lifting the wheels of an axle on trucks and semi-trailers having a plurality of rear axles may be installed in order to extend the service life of the tires when the vehicle travels unloaded.

The currently available devices are rather complex, and their installation requires components purposely designed for the suspension system of the truck and semi-trailer, so that they lend themselves primarily for fitting during the building of the vehicle. It would therefore be desirable to provide a device of the type here considered which, in addition to being simple and economical, would lend itself for fitting not only in the course of the primary construction, serially or as an "optional" feature, but also for fitting additionally to vehicles already in use. One example of such known devices is disclosed by the document EP-A-0 120 332.

A further device is known from EP-A-0 284 572, wherein the lifting assembly is constituted by a pneumatic air spring of a type known per se, and a pair of brackets which can be fastened by means of bolting to the median portion of the movable cross-member formed by the axle body, and to the median portion of the adjacent fixed cross-member of the chassis. This arrangement requires an additional air spring taking up a significant space and adding to the total weight of the vehicle.

EP 1 429 045 discloses an air spring arrangement of a vehicle suspension comprising a first and a second air spring which are connected in parallel.

The object of the present invention is to provide an improved device for lifting a trailing axle and a lifting assembly being part of said device, which device is both lighter and more compact than the known prior art solutions.

### DISCLOSURE OF INVENTION

According to the present invention this is achieved by means of an air spring substantially as claimed in claim 1 and a vehicle provided with such an air spring, as claimed in claim 15.

In the text below, the term "air spring" is intended to encompass all types of pneumatic springs comprising a resilient, elastic or similar member used in a vehicle suspension. The axle to be lifted is preferably a so-called trailing and/or pusher axle that is not driven. However, the invention may be adapted to other types of axles in a commercial vehicle.

In addition, the means for controlling the pneumatic pressure in the air spring or any valves for controlling auxiliary devices will not be described in detail. As these components are not part of the inventive idea, they will only be discussed briefly in the text and shown schematically in the drawings.

According to a preferred embodiment the invention relates to an air spring intended for lifting at least one of the axles of a commercial vehicle having a plurality of rear axles and having axle members which are in the form of cross-members and support the chassis of the vehicle by way of corresponding pairs of pneumatic suspension air springs supplied from a compressed air source. The air spring comprises a lifting assembly located inside the air spring on the axle to be lifted and expansible by the effect of the pressure of the compressed air source to maintain said axle in the raised position when its suspension air springs are load-free.

The lifting assembly may include a pneumatic lifting cylinder interposed between an upper and a lower portion of the air spring. The upper portion may preferably, but not necessarily, be the relatively flat, plate-shaped cover or bracket flange to which the upper part of the elastomeric bellows of the air spring is attached. Similarly, the lower portion may preferably, but not necessarily, be the relatively flat end surface of the hollow plunger to which the lower part of said bellows is attached.

According to a further embodiment, each lifting cylinder may have a first chamber in communication with the volume enclosed by the bellows, and a second chamber adapted for selective communication with a compressed air source by means of a controllable valve, when lifting said axle. Consequently, when it is desired to lift the associated axle, the air springs are first connected to the atmosphere and then a valve is actuated to pressurize said second chamber, thereby lifting the axle. When travelling with the axle in the raised position, the air springs remain vented to the atmosphere.

In reverse, the air springs are pressurized quickly in a first step, in order to avoid any buckling or folding of the elastomeric material of the air bellows. The second chamber is then vented to the atmosphere to release and lower the axle. When travelling with the axle in the lowered position, the second chamber remains vented to the atmosphere.

The second chamber and/or its supply conduits may be provided with a safety valve. If a blockage should occur at any point, preventing the second chamber from being vented to the atmosphere, the second chamber may be subjected to relatively large pressure variations as the air springs takes up axle movements when travelling. To avoid damage to the lifting cylinder, a valve, such as a non-return valve, may be arranged to open and release excessive pressure or vacuum.

According to a first alternative embodiment, the lifting cylinder may comprise a cylinder and piston unit attached to the lower portion, or hollow plunger, of the air spring and a piston rod connected to the piston and attached to the upper portion of the air spring. In this case, the cylinder and piston unit has an upper second chamber in communication with the compressed air source through a hollow piston rod. The conduit through the piston rod may exit into the second chamber adjacent the attachment point to the piston, or pass into the piston and exit through a conduit therein.

According to a second alternative embodiment, the lifting cylinder comprises a cylinder and piston unit attached to the upper portion of the air spring and a piston rod connected to the piston and attached to the lower portion of the air spring. In this case, the cylinder and piston unit has a lower second chamber in communication with the compressed air source through a conduit connected between the upper portion of the air spring and the lower end of the cylinder and piston unit.

According to a third alternative embodiment, the lifting assembly comprises a pair of lifting cylinders, each comprising a cylinder and piston unit attached to the upper and lower portion of the air spring respectively, and where the pistons are joined by a piston rod. In this case, the upper cylinder and piston unit has an lower second chamber in communication with the compressed air source through a hose connected between the upper portion of the air spring and the lower end of the cylinder and piston unit, and that the lower cylinder and piston unit has an upper second chamber in communication with the upper cylinder and piston unit through the piston rod.

When travelling over uneven ground or when negotiating a bend, the movement of the vehicle may cause relative movement between the upper and lower parts of the air spring. This movement may be a transverse or longitudinal motion relative to the main longitudinal axis of the vehicle, an angular movement causing the upper and lower portions to become angled relative to each other, or a combination of the above.

In order to allow for such movements, the upper and lower parts of the lifting assembly may be attached to the respective upper and lower portion of the air spring by means of a pivotable joint. Such a joint may allow either end of the lifting assembly to be angled a sufficient amount, e.g. at least 10° in any direction relative to a main longitudinal axis of an unloaded air spring. In this way any angular or lateral displacement between the upper and lower portions of the air spring may be taken up by angular displacement of the pivotable joint or displacement of the piston relative to the cylinder and piston unit.

The pivotable joint may comprise any suitable type of joint, such as a ball-and-socket joint, a rubber bushing or a rubber bearing.

With the axle in its raised position, any such movement of the axle will be very limited.

The invention further relates to a vehicle provided with a plurality of air springs as described above, in order to lift at least one of the axles of said vehicle having a plurality of rear axles having axle members which are in the form of cross-members and support the chassis of the vehicle by way of corresponding pairs of pneumatic suspension air springs supplied from a compressed air source. A vehicle comprising such air springs may have a lifting assembly located in each of the air springs on the axle to be lifted and expansible by the effect of the pressure of the compressed air source to maintain said axle in the raised position when its suspension air springs are load-free.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows an air spring device according to a first alternative embodiment of the invention;
- Figure 2: shows an arrangement for attaching a piston rod to a device according to the invention;
- Figure 3: shows an arrangement for attaching a piston and cylinder unit to a device according to the invention;
- Figure 4: shows an air spring according to a second alternative embodiment of the invention;
- Figure 5: shows an air spring according to a third alternative embodiment of the invention;
- Figure 6: shows a vehicle provided with a plurality of air springs according to the invention.

### EMBODIMENTS OF THE INVENTION

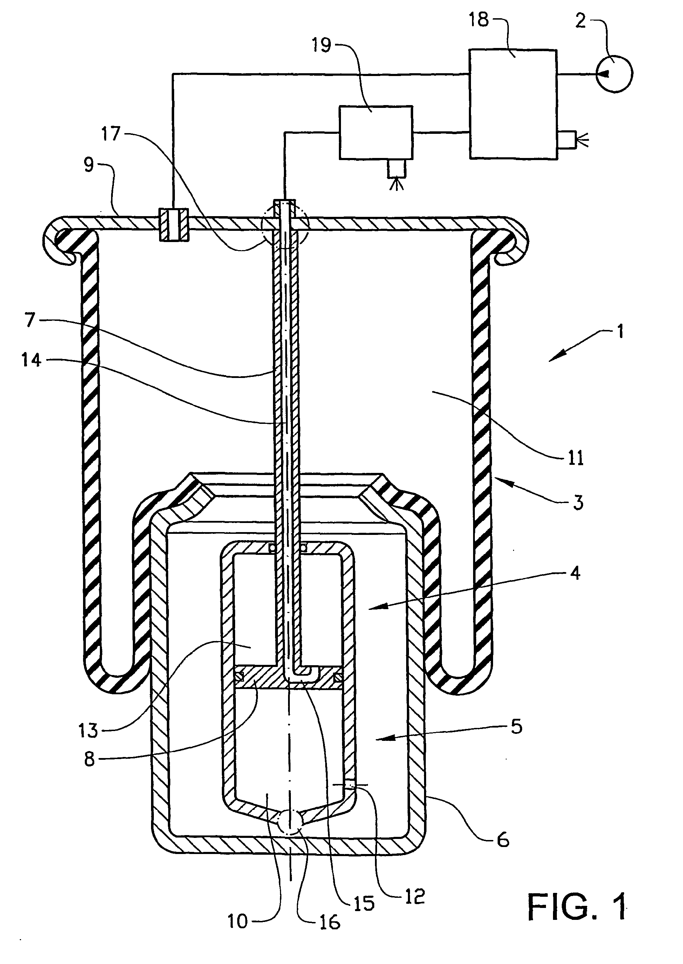

Figure 1 shows an air spring according to a first alternative embodiment of the invention. The air spring comprises an air bellows 3 and a hollow plunger 6. The upper portion 9 of the air spring constitutes a cover or bracket flange. The lower portion of the air spring constitutes the hollow plunger 6. The air bellows 3 connects the cover with the hollow plunger, thereby creating an airtight volume used to suspend a vehicle. Air springs of this kind are well known to the skilled person and are not described further. The air spring further comprises a lifting assembly for lifting the axle to be lifted (not shown) and expansible by the effect of the pressure of the compressed air source 2 to maintain said axle in the raised position when the air spring is load-free.

As shown in the figure, a lifting cylinder 4 may comprise a cylinder and piston unit 5 attached to the hollow plunger 6 of the air spring and a piston rod 7 connected to the piston 8 and attached to the upper portion 9 of the air spring. In this case, the cylinder and piston unit 5 has a lower, first chamber 10 in communication with the inner volume 11 of the air spring via an opening 12. In the subsequent text the cylinder and piston unit 5 will be referred to as the "cylinder unit 5". The cylinder unit 5 further has an upper, second chamber 13 in selective communication with the compressed air source 2 via a first conduit 14 in the piston rod 7 and a second conduit 15 in the piston 8.

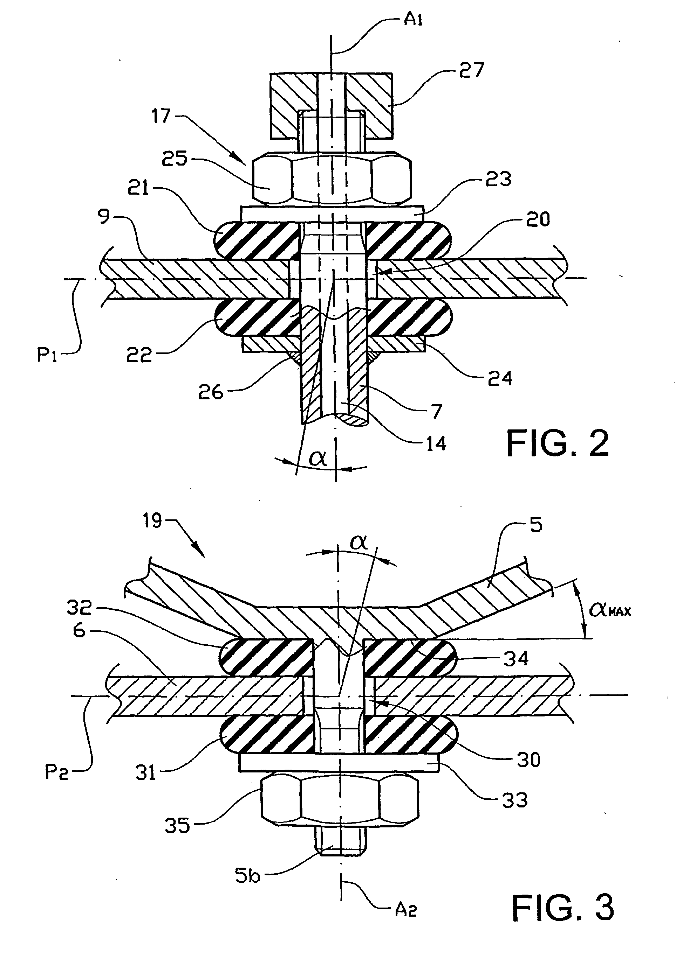

In order to allow sideways displacement and/or angular movement between the hollow plunger 6 and the upper portion 9, the lifting cylinder 4 is attached to both the hollow plunger 6 and the upper portion 9 by means of pivotable joints 16, 17. These joints will be described in further detail in connection with Figures 2 and 3 below.

During normal operation, with the axle in its lowered position, the air spring and its bellows 3 is pressurized by means of the compressed air source 2 via a first control valve 18. The pressure in the air spring can vary due to movement of the axle when travelling over uneven ground. The pressure may also be controlled by the first control valve 18, which can be controlled to maintain a constant ride height in response to a sensor (not shown) for measuring the distance between a vehicle axle and a fixed position on the vehicle frame or the load on the vehicle. The control valve 18 can also adjust the pressure in the air spring when it is desired to lift or lower the vehicle, e.g. for adjusting the height in relation to a loading bay in connection with loading or unloading the vehicle.

When the axle in its lowered position, the lifting cylinder 4 is deactivated by disconnecting the second chamber 13 from the compressed air source 2. This is achieved by means of a second control valve 19 connected between the air spring and the compressed air source 2. The second control valve 19 is a -valve that when activated vents the second chamber 13 to the atmosphere. This allows the piston 8 to move with the upper, portion 9 relative to the cylinder unit 5 and prevents the cylinder unit 5 from being subjected to excessive high or low pressures. The venting port of the second control valve 19 is provided with a filter to avoid particles or pollutants from entering the pneumatic system.

When it is desired to lift the trailing axle, the driver selects a switch in the cab to transmit a control signal to the first control valve 18. The control signal will cause the first control valve 18 to drain the inner volume 11 of the air spring. While the axle is being lifted, the air spring is drained with air and the pressure in the bellows 3 of the air spring is substantially atmospheric. During the lifting of the axle, the second control valve 19 closes its venting port and is connected to the compressed air source 2. This causes the second chamber 13 to be pressurized through the conduits 14 and 15 in the piston rod 7 and piston 8, respectively. As the piston rod 7 is connected to the upper portion 9 and the vehicle frame (not shown), this pressurization will displace the cylinder unit 5 and the hollow plunger 6 upwards. As the hollow plunger 6 is connected to the trailing axle, this causes the axle to be lifted.

The lifting operation is preferably carried out while the vehicle is stationary. Various means may be provided to inhibit the operation by an unintentional action, for instance by monitoring vehicle speed and/or vehicle load. The lifting operation can then be prevented while the vehicle is travelling and/or if the resulting load on the adjacent axle would exceed its design parameters.

Figure 2 shows a pivotable joint 17 arrangement for attaching a piston rod 7 to an air spring 1. The figure shows a piston rod 7 with a central, first conduit 14 passing through a substantially coaxial circular opening 20 in an upper portion 9 of an air spring 1. The opening has a diameter sufficiently large to allow a predetermined angular movement relative to a point where the central axis A₁ of the piston rod 7 intersects a central plane P₁ of the plate-like upper portion 9 in the vicinity of the opening 20. The said diameter must be large enough to allow a relative angle α of approximately 10° between the central axis of the opening 20 and the axis A₁ of the piston rod 7. The arrangement is provided with a polymeric part in the form of a sealing ring 21, 22 on either side of the upper portion 9. The sealing rings 21, 22 are each located by a flat washer 23, 24 fitted coaxially over the piston rod 7. The outer washer 23 is acted on by a nut 25 cooperating with a threaded portion provided at the end of the piston rod. The inner washer 24 is fixed to the piston rod 7, e.g. by a weld 26 around the entire circumference of said piston rod. When the nut 25 is tightened, the washer 23, 24 will deform the sealing rings 21, 22 so that a pressure tight seal is created around the piston rod, while allowing a limited angular movement thereof.

Figure 3 shows a pivotable joint 16 arrangement for attaching a piston and cylinder unit to a device according to the invention. As opposed to the similar arrangement shown in Figure 2, the arrangement of Figure 3 shows the lower end of the cylinder unit 5 provided with a bolt 5a passing through a substantially coaxial circular opening 30 in the lower end of the hollow plunger 6. The opening has a diameter sufficiently large to allow a predetermined angular movement relative to a point where the central axis A₂ of the bolt 5a intersects a central plane P₂ of the lower end of the hollow plunger 6 in the vicinity of the opening 30. The arrangement is further provided with a sealing ring 31, 32 on either side of the lower end of the hollow plunger 6. A flat washer 33 fitted coaxially over the bolt 5a locates the outer sealing ring 31. A flat area 34 surrounding the bolt 5a at the lower end of the cylinder unit 5 locates the inner sealing ring 32. The outer washer 33 is acted on by a nut 35 cooperating with a threaded portion provided at the end of the bolt 5a. When the nut 35 is tightened, the washer 33 and the flat area 34 will deform the sealing rings 31, 32 so that a pressure tight seal is created around the bolt 5a, while allowing a limited angular movement thereof. In order to allow the cylinder unit 5 to be angled relative to the lower end surface of the hollow plunger 6, the lower end of the cylinder unit 5 has been given a conical shape. The portion of the cylinder unit 5 located radially outside the flat area 34 diverges from the lower end surface of the hollow plunger 6 at an angle α_{MAX} corresponding to the maximum allowable angle of the axis of the bolt 5a relative to the central axis of the opening 30.

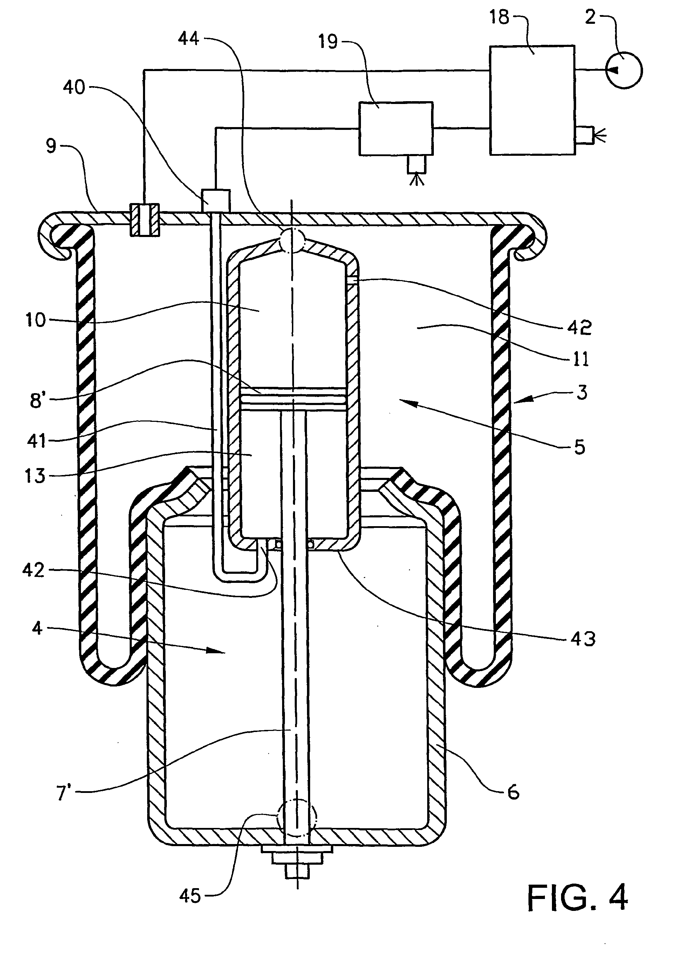

Figure 4 shows a device according to a second alternative embodiment of the invention. This embodiment differs from the embodiment of Figure 1 in that the lifting assembly has been turned through 180°. As shown in Figure 4, using the reference numerals of Figure 1, the lifting cylinder 4 comprises a cylinder and piston unit 5 attached to the plate-shaped upper portion 9 and a piston rod 7' connected to the piston 8 and attached to the hollow plunger 6 of the air spring. In this case, the cylinder unit 5 has an upper, first chamber 10 in communication with the inner volume 11 of the air spring via an opening 12. The cylinder unit 5 further has a lower, second chamber 13 in selective communication with the compressed air source 2. As opposed to the embodiment of Figure 1, this supply of compressed air is connected to the upper portion 9 by a coupling 40 and passes via a conduit 41, such as a hose, from the upper portion 9 to an opening 42 of the lower end 43 of the cylinder unit 5. When the control valve 19 is opened in order to lift the axle (not shown), a supply of pressurized air passes through the conduit 41 and into the second chamber 13 of the cylinder unit 5.

In order to allow sideways displacement and/or angular movement between the hollow plunger 6 and the upper portion 9, the lifting cylinder 4 is attached to both the upper portion 9 and the hollow plunger 6 by means of pivotable joints 44, 45. The joint 44 connecting the upper part of the cylinder unit 5 to the upper portion 9, as well as the design of said upper part, has been described in connection with Figure 3 above. The joint 45 connecting the lower end of the piston rod 7' to the lower end of the hollow plunger 6 comprises e.g. a ball-and-socket joint or is made in a similar way as the pivotable joints described above.

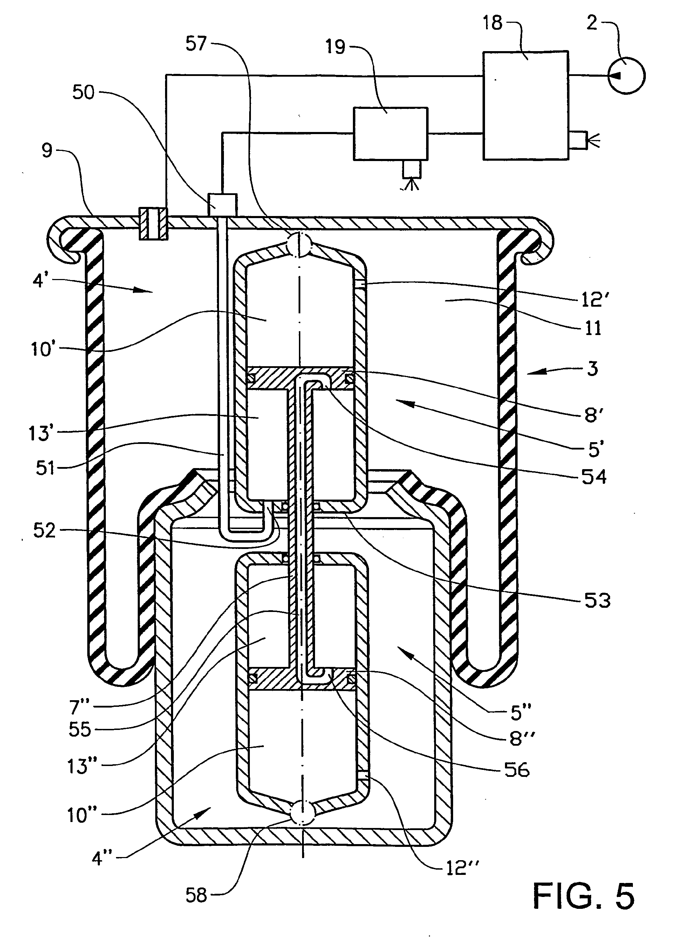

Figure 5 shows a device according to a third alternative embodiment of the invention. This embodiment differs from the embodiment of Figures 1 and 2 in that the lifting assembly comprises two cylinder units 5' and 5". As shown in Figure 5, using the reference numerals of Figure 1, a first lifting cylinder 4' comprises a first cylinder unit 5' attached to the plate-shaped upper portion 9 and a piston rod 7" connected to a first piston 8'. A second lifting cylinder 4" comprises a second cylinder unit 5" attached to the hollow plunger 6 of the air spring and said piston rod 7" connected to a second piston 8". In this case, the first cylinder unit 5' has an upper, first chamber 10' in communication with the inner volume 11 of the bellows 3 via an opening 12'. Similarly, the second cylinder unit 5" has a lower, first chamber 10" in communication with the inner volume 11 of the air spring via an opening 12". The first cylinder unit 5' has a lower, second chamber 13', in selective communication with the compressed air source 2. This supply of compressed air is connected to the upper portion 9 by a coupling 50 and passes via a conduit, such as a hose 51, from the upper portion 9 to an opening 52 of the lower end 53 of the first cylinder unit 5'. The second cylinder unit 5" is supplied with compressed air from the second chamber 13' of the first cylinder unit 5'. This is achieved by means of a conduit 54 in the first piston 8' connected to a central conduit 55 through the piston rod 7" and a conduit 55 in the second piston 8". Hence, when the control valve 19 is opened in order to raise the axle (not shown), a supply of pressurized air passes through the hose 51 into the second chamber 13' of the first cylinder unit 5', from said second chamber 13' through the piston rod 7" and into the second chamber 13" of the second cylinder unit 5". In order to allow sideways displacement and/or angular movement between the hollow plunger 6 and the upper portion 9, the lifting cylinder 4 is attached to both the upper portion 9 and the hollow plunger 6 by means of pivotable joints 57, 58. The joint 57 connecting the upper part of the cylinder unit 5' to the upper portion 9, as well as the design of said upper part, has been described in connection with Figure 3 above. This also applies to the joint 58 connecting the lower part of the cylinder unit 5" to the lower end of the hollow plunger 6.

In the above embodiments, the relative size of the cylinder units will depend on parameters such as the size and weight of the axle to be lifted, available maximum pressure from the source of air pressure and the required lifting distance. For instance, a vehicle with a relatively large ground clearance may require a long cylinder unit. In order to accommodate a longer cylinder unit it is possible to select a cylinder unit diameter and a diameter of the upper section of the hollow plunger that allows a part of the cylinder unit to pass through said upper section of the hollow plunger. On the other hand, a vehicle with a lower ground clearance and a relatively heavy axle may require a cylinder unit with a larger cross-sectional area.

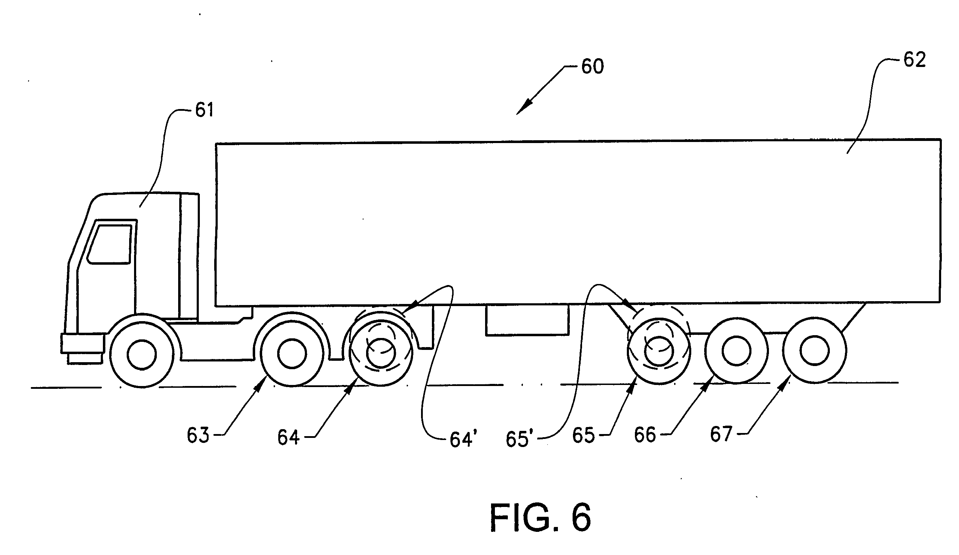

Figure 6 shows a vehicle provided with a plurality of air springs according to the invention. As shown in the figure, a vehicle 60 can be provided with air springs for lifting a wheel axle both on a tractor 61 and a trailer 62. The tractor is provided with wheels supported by a driven axle 63 and a trailing axle 64, where a number of corresponding air springs for the trailing axle is provided with a lifting cylinder as described in connection with Figures 1, 4 or 5 above. Each axle may be suspended by two or four air springs, and at least two of the air springs are according to the invention for lifting the axle. Actuation of the lifting cylinders causes the trailing axle and its associated wheels to lift from a first position, indicated at 64, to a raised position, indicated with dashed lines at 64'. Similarly, the trailer 62 is provided with wheels supported by three separate axles 65, 66, 67, where a number of corresponding air springs for the axle 65 is provided with a lifting cylinder. When the lifting cylinders are actuated the axle 65 and its associated wheels will lift from a first position, indicated at 65, to a raised position, indicated with dashed lines at 65'. Here, one of the trailer axles is a trailing axle possible to lift. It is also possible to provide the trailer with two trailing axles.

The invention is not limited to the above embodiments, but may be varied freely within the scope of the claims.

## Claims

1. Air spring for an air suspended vehicle having a plurality of axles, comprising an air bellows (3) and a hollow plunger (6),
wherein the air spring comprises a lifting assembly located inside the air spring and being expansible by the effect of the pressure of a compressed air source,
wherein the lifting assembly includes a pneumatic lifting cylinder (4) interposed between an upper (9) and a lower portion of the air spring, which portions are connected by the air bellows (3),
wherein the lifting cylinder (4) has a first chamber (10) in communication with the interior (11) of the air spring, and a second chamber (13) adapted for selective communication with a compressed air source (2),
wherein the lifting cylinder (4) comprises a cylinder and piston unit (5) attached to the lower portion of the air spring (1) and a piston rod (7) connected to a piston (8) and attached to the upper portion (9) of the air spring,
**characterized in that**
the communication between the compressed air source (2) and the second chamber (13) is performed through a conduit in the piston rod (7) or through conduits in the piston rod (7) and the piston (8).

2. Air spring according to claim 1, **characterized in that** the lifting cylinder comprises a cylinder and piston unit (5) attached to the upper portion (9) of the air spring and a piston rod (7) connected to a piston (8) and attached to the lower portion (6) of the air spring.

3. Air spring according to claim 2, **characterized in that** the cylinder and piston unit (5) has a second chamber (13) adapted for communication with the compressed air source (2) through a conduit (41) connected between the upper portion of the air spring and the second chamber.

4. Air spring according to claim 1, **characterized in that** the lifting assembly comprises a first and a second lifting cylinder (4', 4"), each comprising a cylinder and piston unit (5', 5") attached to the upper (9) and lower (6) portion of the air spring respectively, and that pistons (8', 8") are joined by a piston rod (7").

5. Air spring according to claim 4, **characterized in that** the first cylinder and piston unit (5') has a lower second chamber (13') adapted for communication with the compressed air source through a conduit (51) connected between the upper portion (9) of the air spring and the second chamber (13'), and that the second cylinder and piston unit (5") has an upper second chamber (13") adapted for communication with the second chamber (13") through the piston rod (7").

6. Air spring according to any of claims 1-5, **characterized in that** the lifting assembly is attached to the upper and lower portion of the air spring respectively by means of a pivotable joint.

7. Air spring according to claim 6, **characterized in that** either end of the lifting assembly can be angled at least 10° in any direction relative to a main longitudinal axis of an unloaded air spring.

8. Air spring according to claim 6 or 7, **characterized in that** the pivotable joint is a ball-and-socket joint.

9. Air spring according to claim 6 or 7, **characterized in that** the pivotable joint comprises a polymeric bushing.

10. Air spring according to any of claims 6 to 9, **characterized in that** the pivotable joint comprises an air inlet.

11. Vehicle having a plurality of axles provided with a plurality of air springs according to any of claims 1 to 10.

## Patentansprüche

1. Luftfeder für ein luftgefedertes Fahrzeug mit einer Vielzahl von Achsen, die einen Luftbalg (3) und einen hohlen Plunger (6) umfasst,
wobei die Luftfeder eine Hebeanordnung umfasst, die innerhalb der Luftfeder angeordnet und durch die Wirkung des Drucks einer Druckluftquelle ausdehnbar ist,
wobei die Hebeanordnung einen pneumatischen Hebezylinder (4) umfasst, der zwischen einem oberen (9) und einem unteren Abschnitt der Luftfeder angeordnet ist, wobei die Abschnitte durch den Luftbalg (3) verbunden sind, wobei der Hebezylinder (4) eine erste Kammer (10), die mit dem Inneren (11) der Luftfeder in Verbindung steht, und eine zweite Kammer (13) aufweist, die für eine wahlweise Verbindung mit einer Druckluftquelle (2) angepasst ist, wobei der Hebezylinder (4) eine an dem unteren Abschnitt der Luftfeder (1) angebrachte Zylinder- und Kolbeneinheit (5) und eine Kolbenstange (7) umfasst, die mit einem Kolben (8) verbunden ist und an dem oberen Abschnitt (9) der Luftfeder angebracht ist,
**dadurch gekennzeichnet, dass**
die Verbindung zwischen der Druckluftquelle (2) und der zweiten Kammer (13) durch eine Leitung in der Kolbenstange (7) oder durch Leitungen in der Kolbenstange (7) und dem Kolben (8) ausgeführt ist.

2. Luftfeder nach Anspruch 1, **dadurch gekennzeichnet, dass** der Hebezylinder eine an dem oberen Abschnitt (9) der Luftfeder angebrachte Zylinder- und Kolbeneinheit (5) und eine Kolbenstange (7) umfasst, die mit einem Kolben (8) verbunden und an dem unteren Abschnitt (9) der Luftfeder angebracht ist.

3. Luftfeder nach Anspruch 2, **dadurch gekennzeichnet, dass** die Zylinder- und Kolbeneinheit (5) eine zweite Kammer (13) aufweist, die für eine Verbindung mit der Druckluftquelle (2) durch eine Leitung (41) angepasst ist, die zwischen dem oberen Abschnitt der Luftfeder und der zweiten Kammer angeschlossen ist.

4. Luftfeder nach Anspruch 1, **dadurch gekennzeichnet, dass** die Hebeanordnung einen ersten und einen zweiten Hebezylinder (4', 4") umfasst, die jeweils eine Zylinder- und Kolbeneinheit (5', 5") umfassen, die an dem oberen (9) bzw. unteren (6) Abschnitt der Luftfeder angebracht ist, und dass Kolben (8', 8") durch eine Kolbenstange (7") verbunden sind.

5. Luftfeder nach Anspruch 4, **dadurch gekennzeichnet, dass** die erste Zylinder- und Kolbeneinheit (5') eine untere zweite Kammer (13') aufweist, die für eine Verbindung mit der Druckluftquelle durch eine Leitung (51) angepasst ist, die zwischen dem oberen Abschnitt (9) der Luftfeder und der zweiten Kammer (13') angeschlossen ist, und dass die zweite Zylinder- und Kolbeneinheit (5") eine obere zweite Kammer (13") aufweist, die für eine Verbindung mit der zweiten Kammer (13") durch die Kolbenstange (7') angepasst ist.

6. Luftfeder nach einem der Ansprüche 1 bis 5, **dadurch gekennzeichnet, dass** die Hebeanordnung an dem oberen bzw. unteren Abschnitt der Luftfeder mittels einer schwenkbaren Verbindung angebracht ist.

7. Luftfeder nach Anspruch 6, **dadurch gekennzeichnet, dass** jedes Ende der Hebeanordnung in einem Winkel von wenigstens 10° in jeder Richtung relativ zu einer Hauptlängsachse einer unbelasteten Luftfeder angeordnet werden kann.

8. Luftfeder nach Anspruch 6 oder 7, **dadurch gekennzeichnet, dass** die schwenkbare Verbindung eine Kugelgelenkverbindung ist.

9. Luftfeder nach Anspruch 6 oder 7, **dadurch gekennzeichnet, dass** die schwenkbare Verbindung eine Polymerbuchse umfasst.

10. Luftfeder nach einem der Ansprüche 6 bis 9, **dadurch gekennzeichnet, dass** die schwenkbare Verbindung einen Lufteinlass umfasst.

11. Fahrzeug mit einer Vielzahl von Achsen, die mit einer Vielzahl von Luftfedern nach einem der Ansprüche 1 bis 10 versehen sind.

## Revendications

1. Ressort pneumatique pour un véhicule à suspension pneumatique ayant une pluralité d'essieux, comprenant un soufflet à air (3) et un piston creux (6),
dans lequel le ressort pneumatique comprend un ensemble de levage situé à l'intérieur du ressort pneumatique et pouvant être étendu sous l'effet de la pression d'une source d'air comprimé,
dans lequel l'ensemble de levage comprend un cylindre de levage pneumatique (4) interposé entre une partie supérieure (9) et une partie inférieure du ressort pneumatique, lesquelles parties étant reliées par le soufflet à air (3),
dans lequel le cylindre de levage (4) a une première chambre (6) en communication avec l'intérieur (11) du ressort pneumatique, et une seconde chambre (13) conçue pour une communication sélective avec une source d'air comprimé (2),
dans lequel le cylindre de levage (4) comprend un ensemble cylindre-piston (5) fixé sur la partie inférieure du ressort pneumatique (1), et une tige de piston (7) reliée à un piston (8) et fixée sur la partie supérieure (9) du ressort pneumatique,
**caractérisé en ce que**
la communication entre la source d'air comprimé (2) et la seconde chambre (13) se fait par l'intermédiaire d'un conduit dans la tige de piston (7) ou par l'intermédiaire de conduits dans la tige de piston (7) et le piston (8).

2. Ressort pneumatique selon la revendication 1, **caractérisé en ce que** le cylindre de levage comprend un ensemble cylindre-piston (5) fixé sur la partie supérieure (9) du ressort pneumatique, et une tige de piston (7) reliée à un piston (8) et fixée sur la partie inférieure (6) du ressort pneumatique.

3. Ressort pneumatique selon la revendication 2, **caractérisé en ce que** l'ensemble cylindre-piston (5) a une seconde chambre (13) conçue pour une communication avec la source d'air comprimé (2) via un conduit (41) relié entre la partie supérieure du ressort pneumatique et la seconde chambre.

4. Ressort pneumatique selon la revendication 1, **caractérisé en ce que** l'ensemble de levage comprend un premier et un second cylindre de levage (4', 4"), comprenant chacun un ensemble cylindre-piston (5', 5") fixé sur la partie supérieure (9) et inférieure (6) du ressort pneumatique, respectivement, et **en ce que** des pistons (8', 8") sont reliés par une tige de piston (7").

5. Ressort pneumatique selon la revendication 4, **caractérisé en ce que** le premier ensemble cylindre-piston (5') a une seconde chambre inférieure (13') conçue pour une communication avec la source d'air comprimé via un conduit (51) relié entre la partie supérieure (9) du ressort pneumatique et la seconde chambre (13'), et **en ce que** le second ensemble cylindre-piston (5') a une second chambre supérieure (13") conçue pour une communication avec la seconde chambre (13") via la tige de piston (7").

6. Ressort pneumatique selon l'une quelconque des revendications 1 à 5, **caractérisé en ce que** l'ensemble de levage est fixé sur la partie supérieure et inférieure du ressort pneumatique, respectivement, par l'intermédiaire d'un joint pivotant.

7. Ressort pneumatique selon la revendication 6, **caractérisé en ce que** l'une ou l'autre extrémité de l'ensemble de levage peut être inclinée sur au moins 10° dans une direction quelconque par rapport à un axe longitudinal principal d'un ressort pneumatique déchargé.

8. Ressort pneumatique selon la revendication 6 ou 7, **caractérisé en ce que** le joint pivotant est un joint à rotule.

9. Ressort pneumatique selon la revendication 6 ou 7, **caractérisé en ce que** le joint pivotant comprend une bague polymère.

10. Ressort pneumatique selon l'une quelconque des revendications 6 à 9, **caractérisé en ce que** le joint pivotant comprend une entrée d'air.

11. Véhicule ayant une pluralité d'essieux munis d'une pluralité de ressorts pneumatiques selon l'une quelconque des revendications 1 à 10.
